# EUROPEAN PATENT APPLICATION

(11) **EP 4 530 699 A1**
(43) Date of publication of application: **02.04.2025**
(21) Application number: 23830496.8
(22) Date of filing: 30.06.2023
(51) Int. Cl.: G02B 27/01, B60J 1/02

(54) **HEAD-UP DISPLAY GLASS AND HEAD-UP DISPLAY SYSTEM**

(30) Priority: 30.06.2022 CN 202210757016
(71) Applicant: Fuyao Glass Industry Group Co., Ltd., Fuqing, Fujian 350300 (CN)
(72) Inventor: TSO, Fai, Fuqing, Fujian 350300 (CN); HUANG, Fengzhu, Fuqing, Fujian 350300 (CN); ZENG, Dong, Fuqing, Fujian 350300 (CN); YANG, Bin, Fuqing, Fujian 350300 (CN); LIN, Gaoqiang, Fuqing, Fujian 350300 (CN); FUKUHARA, Kohta, Fuqing, Fujian 350300 (CN)
(74) Representative: Mewburn Ellis LLP
(86) International application number: PCT/CN2023/104571
(87) International publication number: WO 2024/002332

(57) **Abstract**

Head-up display glass and a head-up display system are provided in the present disclosure. The head-up display glass includes outer glass, inner glass, an interlayer, and a reflective coating. The interlayer is disposed between a second surface of the outer glass and a third surface of the inner glass. The reflective coating is disposed on a fourth surface of the inner glass. The reflective coating can reflect P-polarized light. The reflective coating includes at least one low-emissivity layer and at least one laminated structure that are stacked in sequence. Each laminated structure includes a high-refractive-index layer and a low-refractive-index layer that are stacked in sequence. **In** each laminated structure, the high-refractive-index layer is closer to the fourth surface than the low-refractive-index layer. A refractive index of the high-refractive-index layer is greater than or equal to 1.8. A refractive index of the low-refractive-index layer is less than 1.8. The present disclosure can take account of multiple performance of head-up display (HUD), heat insulation, and low radiation, so that a driver or a passenger can more sharply observe a sharp head-up display image without ghosting.

## Description

This application claims priority to Chinese Patent Application No. 202210757016.1, filed June 30, 2022, and entitled "HEAD-UP DISPLAY GLASS AND HEAD-UP DISPLAY SYSTEM", the entire disclosure of which is hereby incorporated by reference.

### TECHNICAL FIELD

This disclosure relates to the field of transportation means technology, and in particular to head-up display glass and a head-up display system.

### BACKGROUND

Vehicles equipped with head-up display (HUD) systems can display important driving information such as speed, engine revolution, fuel consumption, tire pressure, navigation, and information about an external smart device, in field of view of a driver in real time, so that the driver can observe the information on an instrument panel and other devices without looking down, thereby avoiding distracting the driver from the road ahead. In addition, the driver does not need to adjust the focus of eyes between observing a long-range road and a short-range instrument, which can avoid eye fatigue and greatly enhance driving safety performance and improve driving experience. At present, it is difficult for laminated glass used in the head-up display system to take account of the multiple performance of head-up display, heat insulation, and low radiation.

### SUMMARY

Head-up display glass and a head-up display system are provided in embodiments of the present disclosure, which can take account of multiple performance of head-up display (HUD), heat insulation, and low radiation, so that a driver or passenger can observe a head-up display image more sharply, and improve visual comfort, thermal comfort, and driving safety of a user.

In a first aspect, head-up display glass is provided in the present disclosure. The head-up display glass includes outer glass, inner glass, an interlayer, and a reflective coating. The outer glass has a first surface and a second surface opposite to the first surface. The inner glass has a third surface and a fourth surface opposite to the third surface. The third surface is opposite to the second surface. The interlayer is disposed between the second surface and the third surface. The reflective coating is disposed on the fourth surface. The reflective coating is configured to reflect P-polarized light. The reflective coating includes at least one low-emissivity layer and at least one laminated structure. Each of the laminated structures includes a high-refractive-index layer and a low-refractive-index layer stacked in sequence. In each of the at least one laminated structure, the high-refractive-index layer is closer to the fourth surface than the low-refractive-index layer. The high-refractive-index layer has a refractive index greater than or equal to 1.8. The low-refractive-index layer has a refractive index less than 1.8.

In one possible implementation, the at least one low-emissivity layer each is made of indium tin oxides (ITO), fluorine-doped tin oxides (FTO), or doped zinc oxides. A doping element in the doped zinc oxides includes at least one of yttrium (Y), calcium (Ca), tin (Sn), indium (In), copper (Cu), magnesium (Mg), tungsten (W), hafnium (Hf), zirconium (Zr), aluminum (Al), sliver (Ag), platinum (Pt), or gold (Au).

In a possible implementation, when a thickness of the low-emissivity layer is greater than or equal to 30 nm and less than or equal to 100 nm, an emissivity of the head-up display glass measured from the inner glass is less than or equal to 0.85.

In a possible implementation, when a thickness of the low-emissivity layer is greater than 100 nm and less than or equal to 200 nm, an emissivity of the head-up display glass measured from the inner glass is less than or equal to 0.5.

In a possible implementation, when a thickness of the low-emissivity layer is greater than 200 nm, an emissivity of the head-up display glass measured from the inner glass is less than or equal to 0.2.

In a possible implementation, the at least one low-emissivity layer is in direct contact with the fourth surface and/or in direct contact with the low-refractive-index layer.

In a possible implementation, a total thickness of at least one low-refractive-index layer of the at least one laminated structure is larger than a total thickness of at least one high-refractive-index layer of the at least one laminated structure.

In a possible implementation, the outer glass is tinted glass. The outer glass has a solar direct transmittance less than 70%. The outer glass has a visible-light transmittance greater than 80%. The outer glass has an absorbance greater than or equal to 3% for the P-polarized light.

In a possible implementation, the interlayer is a rectangular interlayer or a wedge-shaped interlayer having a wedge angle ranging from 0.01 mrad to 0.18 mrad.

In a possible implementation, the head-up display glass has a total solar energy transmittance less than or equal to 65%.

In a possible implementation, the head-up display glass has a reflectivity greater than or equal to 18% for the P-polarized light incident at an incident angle of 65°.

In a possible implementation, the head-up display glass has a reflectivity greater than or equal to 13% for P-polarized light having a wavelength of each of 469 nm, 532 nm, and 629 nm incident at an incident angle of 65°.

In a possible implementation, a ratio of a reflectivity of a primary image to a reflectivity of a secondary image of the head-up display glass is greater than or equal to 25 for P-polarized light incident at an incident angle of 65°.

In a possible implementation, the head-up display glass has a visible-light transmittance greater than or equal to 70%. A reflected color of the head-up display glass for visible light incident at an incident angle of 65° measured from the outer glass has a value of *a* less than or equal to 1 in a color space Lab. The head-up display glass has a reflectivity less than 30% for visible light incident at an incident angle of 65° measured from the inner glass.

In a possible embodiment, the reflective coating includes two low-emissivity layers. One of the two low-emissivity layers is located between the fourth surface and the at least one laminated structure, and the other of the two low-emissivity layers is located on an outside of a low-refractive-index layer of a farthest laminated structure of the at least one laminated structure away from the fourth surface.

In a possible implementation, the at least one low-emissivity layer is located in the at least one laminated structure, one of the at least one low-emissivity layer in one of the at least one laminated structure replaces one high-refractive-index layer in said one of the at least one laminated structure, and a structure of "low-emissivity layer/low-refractive-index layer" is formed.

In a possible implementation, in the reflective coating, a total thickness of at least one low-refractive-index layer of the at least one laminated structure is larger than a total thickness of at least one high-refractive-index layer of the at least one laminated structure.

In a possible implementation, the outer glass has a visible-light transmittance greater than or equal to 80%, and a solar direct transmittance *TE* less than or equal to 60%. The interlayer has a visible-light transmittance greater than or equal to 80%, and a solar direct transmittance less than 70%.

In a possible implementation, the high-refractive-index layer includes at least two high-refractive-index sub-layers. A refractive-index difference between any two adjacent high-refractive-index sub-layers of the at least two high-refractive-index sub-layers is greater than or equal to 0.1; and/or the low-refractive-index layer includes at least two low-refractive-index sub-layers.

In a second aspect, a head-up display system is further provided in the present disclosure. The head-up display system includes a projection device and the head-up display glass as described above. The projection device is configured to produce projection light. At least 80% of the projection light is P-polarized light. The projection light is incident on the reflective coating at an incident angle ranging from 45° to 85°.

### BRIEF DESCRIPTION OF THE DRAWINGS

FIG. 1 is a schematic structural view of a vehicle provided in embodiments of the present disclosure.
FIG. 2 is a schematic structural view of head-up display glass of the head-up display system illustrated in FIG. 1.
FIG. 3 is a schematic view of an imaging process of a head-up display system provided in embodiments of the present disclosure.
FIG. 4 is a first schematic structural view of a reflective coating of head-up display glass provided in embodiments of the present disclosure.
FIG. 5 is a second schematic structural view of a reflective coating of head-up display glass provided in embodiments of the present disclosure.
FIG. 6 is a third schematic structural view of a reflective coating of head-up display glass provided in embodiments of the present disclosure.
FIG. 7 is a fourth schematic structural view of a reflective coating of head-up display glass provided in embodiments of the present disclosure.
FIG. 8 is a fifth schematic structural view of a reflective coating of head-up display glass provided in embodiments of the present disclosure.

### DETAILED DESCRIPTION

Specific implementations of the present disclosure will be clearly described below with reference to the accompanying drawings.

Head-up display glass, a head-up display system, and a vehicle are provided in embodiments of the present disclosure, which can take account of multiple performance of head-up display (HUD), heat insulation, and low radiation, so that a driver or passenger can more sharply observe a sharp head-up display image without ghosting, thereby improving visual comfort, thermal comfort, and driving safety of a user.

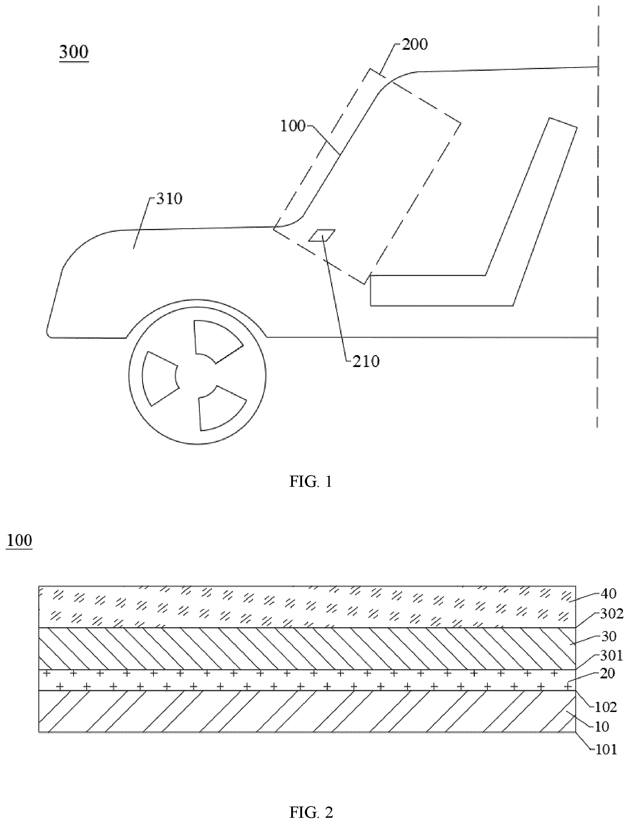

FIG. 1 is a schematic structural view of a vehicle 300 provided in embodiments of the present disclosure.

Referring to FIG. 1, the vehicle 300 may include a vehicle body 310 and a head-up display system 200. The head-up display system 200 is connected to the vehicle body 310. The head-up display system 200 may include a projection device 210 and head-up display glass 100.

The head-up display glass 100 may be a front windshield of the vehicle 300. The projection device 210 may be disposed inside the vehicle body 310. The projection device 210 can emit projection light towards the head-up display glass 100, the projection light is incident on the head-up display glass 100 at an incident angle of 45° to 85°, and the projection light enters human eyes after being reflected by the head-up display glass 100, so that the human eyes can observe a sharp head-up display image located in front of the head-up display glass 100, without ghosting.

At least 80% of the projection light emitted by the projection device 210 is P-polarized light. The head-up display glass 100 of the present disclosure can reflect P-polarized light to form a head-up display image. When a proportion of P-polarized light in the projection light is higher, it is easier to eliminate a visual ghosting phenomenon of the head-up display image. More preferably, at least 90% of the projection light is P-polarized light, especially 100% of the projection light is P-polarized light, that is, the projection light is substantially pure P-polarized light. The head-up display glass 100 of the present disclosure has a reflectivity greater than or equal to 18% for P-polarized light incident at an incident angle of 65°, and more preferably greater than or equal to 20%, so that the head-up display image is brighter and sharper, thereby improving driving safety.

The head-up display glass 100 of the present disclosure has a reflectivity of greater than or equal to 13% for P-polarized light having a wavelength of each of 469 nm, 532 nm, and 629 nm incident at an incident angle of 65°, preferably greater than or equal to 15%, further preferably greater than or equal to 18%, or even greater than or equal to 20%, so as to achieve full-color display of the head-up display image.

The head-up display glass 100 of the present disclosure has a total solar energy transmittance *Tts* less than or equal to 65%, preferably less than or equal to 60%, further preferably less than or equal to 55%, further preferably less than or equal to 50%, or even less than or equal to 45%. Therefore, the head-up display can have better heat insulation performance, and the thermal comfort in the vehicle is improved.

An emissivity of ordinary laminated glass is usually about 0.9. An emissivity of the head-up display glass 100 of the present disclosure measured from the inside of the vehicle is less than or equal to 0.85, further preferably less than or equal to 0.5, further preferably less than or equal to 0.3, or even less than or equal to 0.2. Therefore, the head-up display glass can have better low-emissivity performance, so that the heat radiation from the exterior of the vehicle into the interior of the vehicle 300 is reduced in summer, and heat loss from the interior of the vehicle into the exterior of the vehicle 300 is reduced in winter, which is more conducive to meeting requirements of energy conservation and environmental protection.

A reflected color of the head-up display glass 100 of the present disclosure for visible light incident at an incident angle of 65° measured from the outside of the vehicle has a value of *a* less than or equal to 1. Therefore, the head-up display glass 100 is avoided from being slightly reddish when observed from the outside of the vehicle, thereby maintaining a good overall appearance.

The head-up display glass 100 of the present disclosure has a visible-light transmittance greater than or equal to 70%, so that safety driving requirements of vehicle glass can be met. In order to reduce reflections of objects in the vehicle, such as an instrument panel, on the head-up display glass 100 that interferes with field of vision of the driver, the reflectivity of the head-up display glass 100 of the present disclosure for visible light incident at an incident angle of 65° measured from the inside of the vehicle is less than 30%, preferably less than or equal to 25%.

FIG. 2 is a schematic structural diagram of the head-up display glass 100 of the head-up display system 200 illustrated in FIG. 1.

Referring to FIG. 2, the head-up display glass 100 may include outer glass 10, an interlayer 20, inner glass 30, and a reflective coating 40. The outer glass 10, the interlayer 20, and the inner glass 30 are sequentially stacked to form laminated glass. The reflective coating 40 is disposed on a surface of the inner glass 30 away from the interlayer 20. The reflective coating 40 can reflect P-polarized light.

It may be noted that, FIG. 2 aims to schematically describe the connection relationship between the outer glass 10, the interlayer 20, the inner glass 30, and the reflective coating 40, and is not intended to specifically limit the connection position, specific configuration, and quantity of each device. The schematic structure of embodiments of the present disclosure does not constitute a specific limitation to the head-up display glass 100. In other embodiments of the present disclosure, the head-up display glass 100 may include more or fewer components than illustrated in FIG. 2, or combine or split certain components, or have different component arrangements. The components illustrated in FIG. 2 may be implemented in hardware, software, or a combination of software and hardware.

Referring to FIG. 2 again, the outer glass 10 may has a first surface 101 and a second surface 102 opposite to the first surface 101. The first surface 101 is a surface of the outer glass 10 that is close to the outside of the vehicle, and the second surface 102 is a surface of the outer glass 10 that is close to the interlayer 20. Exemplarily, the thickness of the outer glass 10 may be greater than or equal to 1.8 mm, and specifically may be 1.9 mm, 2.0 mm, 2.1 mm, 2.5 mm, 2.8 mm, 3.0 mm, 3.2 mm, 3.5 mm, etc. The outer glass 10 may be transparent glass or tinted glass. The tinted glass may be green glass, gray glass, or the like. The tinted glass has a certain absorption effect on P-polarized light, so that P-polarized light reaching the first surface 101 of the outer glass 10 can be reduced, and brightness of a secondary image formed by reflected projection light on the first surface 101 can be further weakened, which is more conducive to eliminating the ghosting of the head-up display glass 100, thereby making the head-up display image formed by the reflective coating 40 reflecting the projection light sharper. Meanwhile, the use of tinted glass as the outer glass 10 can also reduce an influence of the reflective coating 40 on a reflected color of the outside of the vehicle, which is more conducive to improving the design freedom of the reflective coating 40. In addition, the tinted glass has a certain absorption effect on infrared rays, ultraviolet rays, etc., so that the head-up display glass further has a heat insulation effect and an ultraviolet isolation effect. The outer glass 10 may be made of soda-lime-silicate, borosilicate, aluminosilicate, or the like.

In a possible implementation, the solar direct transmittance *TE* of the outer glass 10 may be less than 70%. The visible-light transmittance of the outer glass 10 may be greater than 80%. The absorbance of the outer glass 10 may be greater than or equal to 3% for P-polarized light.

The interlayer 20 is disposed between the outer glass 10 and the inner glass 30. A difference between the refractive index of the interlayer 20 and the refractive index of the outer glass 10 is less than 0.1. A difference between the refractive index of the interlayer 20 and the refractive index of the inner glass 30 is less than 0.1. The interlayer 20 is used to connect the outer glass 10 and the inner glass 30 to form the head-up display glass 100 with a laminated glass structure, which meets the safety requirements for vehicles.

By providing the reflective coating 40 in the present disclosure, the head-up display glass 100 can reflect P-polarized light to form a sharp head-up display image without ghosting, so that a conventional wedge-shaped interlayer with a large wedge angle can be avoided, for example, a wedge-shaped polyvinyl butyral (PVB) with a wedge angle greater than 0.3 mrad, which is expensive and difficult to manufacture, can be avoided. In the present disclosure, a rectangular interlayer having uniform thickness can be adopted, and a wedge angle of the rectangular interlayer is almost equal to 0, so that the manufacturing cost of the head-up display glass 100 can be reduced. It can be understood that during manufacturing of the head-up display glass 100, a wedge-shaped interlayer with a relatively small wedge angle may also be produced. For example, during high-pressure lamination or through a simple stretching process, the rectangular interlayer is formed into a wedge-shaped interlayer with a wedge angle ranging from 0.01 mrad to 0.18 mrad, and the specific wedge angle may be 0.05 mrad, 0.10 mrad, 0.15 mrad, 0.18 mrad, etc. Therefore, the reflective ghosting and the perspective or see-through ghosting can be eliminated at the same time in a low-cost manner, thereby obtaining the head-up display image and observation effect of high quality.

Exemplarily, the material of the interlayer 20 is a thermoplastic polymer, specifically PVB, ethylene vinyl acetate (EVA), sentry glass plus (SGP), or polyurethane (PU), etc. The interlayer 20 may have a single-layer structure or a multi-layer structure. For example, the multi-layer structure may be a double-layer structure, a three-layer structure, a four-layer structure, a five-layer structure, etc. The interlayer 20 may also have other functions such as providing at least one colored region as a shadow band to reduce the interference of sunlight in human eyes, or adding an infrared absorber to have a sunscreen or heat insulation function, or adding an ultraviolet absorber to have an ultraviolet insulation function, or at least one layer of the multi-layer structure has a higher plasticizer content to have a sound insulation function.

The inner glass 30 may has a third surface 301 and a fourth surface 302 opposite to the third surface 30. The third surface 301 is a surface of the inner glass 30 close to the interlayer 20, and the fourth surface 302 is a surface of the inner glass 30 close to the inside of the vehicle. The third surface 301 is opposite to the second surface 102. The thickness of the inner glass 30 may range from 0.7 mm to 2.1 mm (both inclusive), and specifically may be 0.7 mm, 1.0 mm, 1.1 mm, 1.2 mm, 1.5 mm, 1.6 mm, 1.8 mm, 2.1 mm, etc. Preferably, the thickness of the inner glass 30 may be smaller than or equal to the thickness of the outer glass 10. For example, the thickness of the outer glass 10 is at least 0.5 mm greater than the thickness of the inner glass 30. The thinner inner glass 30 can make the head-up display glass 100 form a laminated glass structure with an asymmetric thickness, thereby achieving lightweight and obtaining a better head-up display effect on the basis of meeting the safety requirements of the head-up display glass 100.

In a possible implementation, the projection light is incident on the head-up display glass 100 at an incident angle ranging from 45° to 85°, part of the projection light is directly reflected by the reflective coating 40 to form a primary image of the head-up display image, and another part of the projection light entering the head-up display glass 100 and reaching the first surface 101 is reflected by the first surface 101 to form a secondary image of the head-up display image. In order to ensure that the human eyes observe a sharp head-up display image without ghosting, it is necessary to make the secondary image as unobserved as possible compared with the primary image. Preferably, a ratio of a reflectivity *Rp4* of the head-up display glass 100 for P-polarized light incident at an incident angle of 65° to a reflectivity *Rp1* of the first surface 101 for P-polarized light reaching the first surface 101 is greater than or equal to 25, for example, the ratio may be 25, 30, 35, 40, 50, 60, 70, 80, 90, 100, etc.

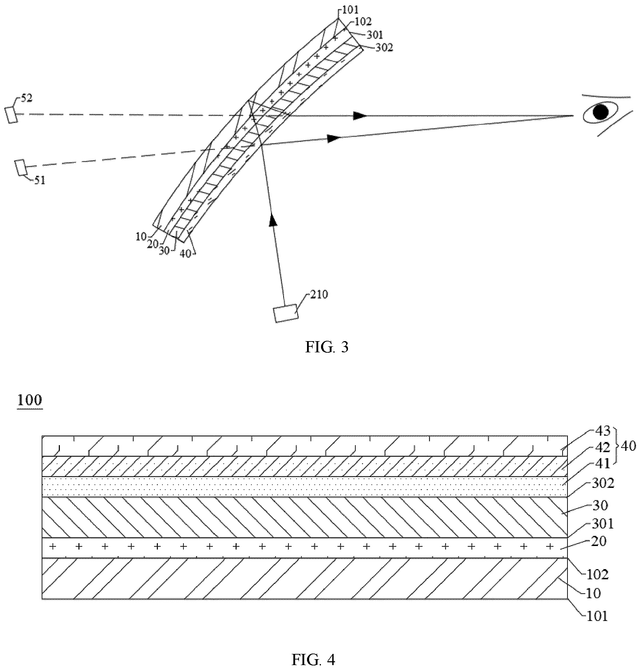

FIG. 3 is a schematic view of an imaging process of a head-up display system 200 provided in embodiments of the present disclosure.

Referring to FIG. 3, the reflective coating 40 is disposed on the fourth surface 302 of the inner glass 30.

The projection light projected by the projection device 210 is directly incident on the reflective coating 40. Part of the projection light is directly reflected by the reflective coating 40 to form a primary image 51 of the head-up display image. After another part of the projection light passes through the reflective coating 40, the inner glass 30, the interlayer 20, and the outer glass 10 in sequence and reaches the first surface 101, some of another part of projection light is reflected by the first surface 101 to form a secondary image 52 of the head-up display image. The reflective coating 40 in the present disclosure has a high reflectivity for P-polarized light and can form a sharp primary image 51. In addition, with the aid of the reflection of the reflective coating 40 and the absorption of the head-up display glass 100, P-polarized light reaching the first surface 101 is greatly reduced, and based on the Brewster angle effect, the first surface 101 also has a very low reflectivity for the P-polarized light reaching the first surface 101, so that the secondary image 52 is not easy to be observed by the human eyes.

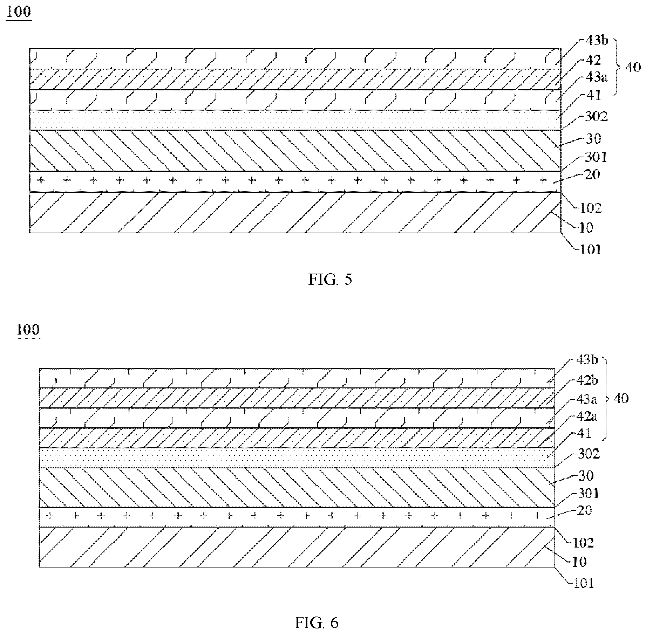

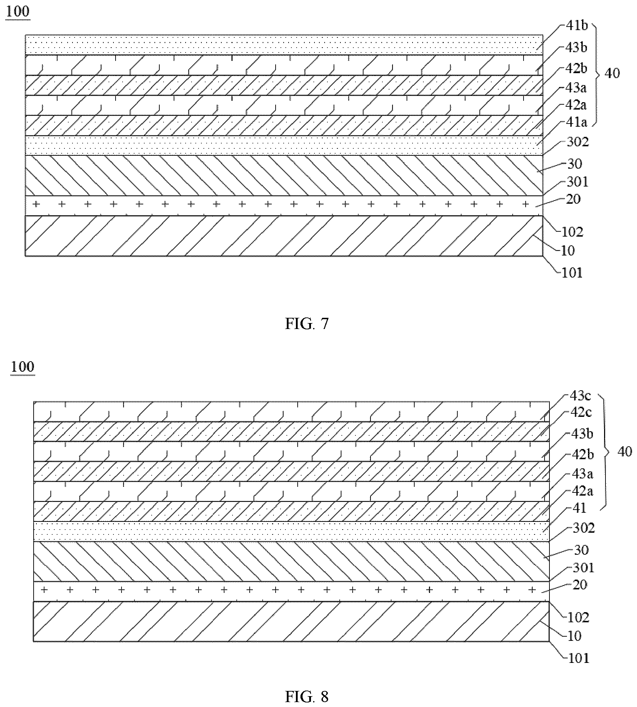

FIG. 4 is a first schematic structural view of a reflective coating 40 of head-up display glass 100 provided in embodiments of the present disclosure. FIG. 5 is a second schematic structural view of a reflective coating 40 of head-up display glass 100 provided in embodiments of the present disclosure. FIG. 6 is a third schematic structural view of a reflective coating 40 of head-up display glass 100 provided in embodiments of the present disclosure. FIG. 7 is a fourth schematic structural view of a reflective coating 40 of head-up display glass 100 provided in embodiments of the present disclosure. FIG. 8 is a fifth schematic structural view of a reflective coating 40 of head-up display glass 100 provided in embodiments of the present disclosure.

Referring to FIG. 4 to FIG. 8, the reflective coating 40 includes at least one low-emissivity layer 41 and at least one laminated structure. Each of the least one laminated structure includes a high-refractive-index layer and a low-refractive-index layer stacked in sequence. In each of the at least one laminated structure, the high-refractive-index layer is closer to the fourth surface 302 than the low-refractive-index layer. The high-refractive-index layer has a refractive index greater than or equal to 1.8. The low-refractive-index layer has a refractive index less than 1.8. One of the at least one low-emissivity layer 41 may be located between the fourth surface 302 and the at least one laminated structure, and/or located on the outside of a farthest low-refractive-index layer of the at least one laminated structure away from the fourth surface 302, and/or located in one of the at least one laminated structure. When the low-emissivity layer 41 is located in one of the at least one laminated structure, a high-refractive-index layer in the laminated structure is replaced by the low-emissivity layer 41, that is, a structure of "low-emissivity layer/low-refractive-index layer" is formed. For example, specifically, the reflective coating 40 may include "fourth surface 302/low-emissivity layer/at least one laminated structure", or "fourth surface 302/at least one laminated structure/low-emissivity layer", or "fourth surface 302/low-emissivity layer/at least one laminated structure/low-emissivity layer", or "fourth surface 302/at least one laminated structure/low-emissivity layer/low-refractive-index layer", or "fourth surface 302/low-emissivity layer/low-refractive-index layer/at least one laminated structure", or "fourth surface 302/low-emissivity layer/at least one laminated structure/low-emissivity layer/low-refractive-index layer", etc.

The at least one low-emissivity layer 41 each is made of a transparent conductive oxide (TCO). For example, specifically, the at least one low-emissivity layer 41 each may be made of indium tin oxides (ITO), fluorine-doped tin oxides (FTO), or doped zinc oxides. A doping element in the doped zinc oxides includes at least one of yttrium (Y), calcium (Ca), tin (Sn), indium (In), copper (Cu), magnesium (Mg), tungsten (W), hafnium (Hf), zirconium (Zr), aluminum (Al), sliver (Ag), platinum (Pt), or gold (Au). For example, specifically, the doped zinc oxide may be aluminum-doped zinc oxide (AZO), hafnium- and aluminum-doped zinc oxide (HAZO), yttrium-doped zinc oxide (YZO), and gallium-doped zinc oxide (GZO). The low-emissivity layer 41 is in direct contact with the fourth surface 302 and/or in direct contact with the low-refractive-index layer of the at least one laminated structure, and the thickness of the low-emissivity layer 41 is greater than or equal to 30 nm, so that the head-up display glass 100 not only realizes a head-up display function, but also has functions of heat insulation and low emissivity. When the thickness of the low-emissivity layer 41 is greater than or equal to 30 nm and less than or equal to 100 nm, the emissivity of the head-up display glass 100 measured from the inside of the vehicle is less than or equal to 0.85. When the thickness of the low-emissivity layer 41 is greater than 100 nm and less than or equal to 200 nm, the emissivity of the head-up display glass 100 measured from the inside of the vehicle is less than or equal to 0.5, preferably less than or equal to 0.4, further preferably less than or equal to 0.3, and even less than or equal to 0.25. When the thickness of the low-emissivity layer 41 is greater than 200 nm, the emissivity of the head-up display glass 100 measured from the inside of the vehicle is less than or equal to 0.2.

The high-refractive-index layer may be made of an oxide or an alloy oxide or a nitride or a nitrogen oxide of Zr, niobium (Nb), silicon (Si), antimony (Sb), Sn, zinc (Zn), In, Al, nickel (Ni), chromium (Cr), Mg, manganese (Mn), vanadium (V), W, Hf, tantalum (Ta), molybdenum (Mo), gallium (Ga), Y, bismuth (Bi), titanium (Ti), etc. For example, specifically, the high-refractive-index layer may be made of zinc tin oxide (ZnSnOₓ), titanium oxide (TiOₓ), niobium oxide (NbOₓ), silicon nitride (SiNₓ), silicon aluminum nitride (SiAlN_{y}), silicon zirconium nitride (SiZrNₓ), etc. The value of x can be determined according to stoichiometry, sub-stoichiometry, or super-stoichiometry in a magnetron sputtering process. In order to better achieve that the optical performance, mechanical performance, and appearance color of the reflective coating 40 all meet the comprehensive requirements of vehicle window glass, the high-refractive-index layer may have a single-layer structure or a multi-layer structure, for example, including at least two high-refractive-index sub-layers, and a refractive-index difference between two adjacent high-refractive-index sub-layers of the at least two high-refractive-index sub-layers may be greater than or equal to 0.1.

The low-refractive-index layer may be made of an oxide or an alloy oxide or a nitrogen oxide or a carbide or a fluoride of Si, Al, Mg, Zr, etc. For example, specifically, the low-refractive-index layer may be made of silicon oxide (SiO₂), silicon aluminum oxide (SiAlOₓ), silicon zirconium oxide (SiZrO_{X}), aluminum oxide (Al₂O₃), magnesium oxide (MgO), magnesium fluoride (MgF), etc. The value of *x* is determined according to stoichiometry, sub-stoichiometry, or super-stoichiometry in a magnetron sputtering process. In order to better achieve that the optical performance, mechanical performance, and appearance color of the reflective coating 40 all meet the comprehensive requirements of vehicle window glass, the low-refractive-index layer may have a single-layer structure or a multi-layer structure, for example, including at least two low-refractive-index sub-layers.

The reflective coating 40 may include one laminated structure of "high-refractive-index layer/low-refractive-index layer", or may include at least two laminated structures of high-refractive-index layer/low-refractive-index layer". For example, the reflective coating 40 may include two laminated structures, three laminated structures, four laminated structures, etc.

In a possible implementation, a total thickness of at least one low-refractive-index layer of the at least one laminated structure is larger than a total thickness of at least one high-refractive-index layer of the at least one laminated structure.

In a first specific application scenario, as illustrated in FIG. 4, the reflective coating 40 includes a low-emissivity layer and a laminated structure of "high-refractive-index layer/low-refractive-index layer". Specifically, a low-emissivity layer 41, a high-refractive-index layer 42, and a low-refractive-index layer 43 are disposed on the fourth surface 302 in sequence.

In a second specific application scenario, as illustrated in FIG. 5, the reflective coating 40 includes a low-emissivity layer, a laminated structure of "high-refractive-index layer/low-refractive-index layer", and a low-refractive-index layer additionally provided between the low-emissivity layer and the high-refractive-index layer, so that a structure of "low-emissivity layer/low-refractive-index layer" is formed, which is equivalent to that the low-emissivity layer is located in one laminated structure and replaces the high-refractive-index layer therein. Specifically, a low-emissivity layer 41, a first low-refractive-index layer 43a, a high-refractive-index layer 42, and a second low-refractive-index layer 43b are disposed on the fourth surface 302 in sequence.

In a third specific application scenario, as illustrated in FIG. 6, the reflective coating 40 includes one low-emissivity layer and two laminated structures of "high-refractive-index layer/low-refractive-index layer". Specifically, a low-emissivity layer 41, a first high-refractive-index layer 42a, a first low-refractive-index layer 43a, a second high-refractive-index layer 42b, and a second low-refractive-index layer 43b are disposed on the fourth surface 302 in sequence. The material and thickness of the first low-refractive-index layer 43a may be the same as or different from the material and thickness of the second low-refractive-index layer 43b. The material and thickness of the first high-refractive-index layer 42a may be the same as or different from the material and thickness of the second high-refractive-index layer 42b.

In a fourth specific application scenario, as illustrated in FIG. 7, the reflective coating 40 includes two low-emissivity layers and two laminated structures of "high-refractive-index layer/low-refractive-index layer". Specifically, a first low-emissivity layer 41a, a first high-refractive-index layer 42a, a first low-refractive-index layer 43a, a second high-refractive-index layer 42b, a second low-refractive-index layer 43b, and a second low-emissivity layer 41b are disposed on the fourth surface 302 in sequence. The material and thickness of the first low-emissivity layer 41a may be the same as or different from the material and thickness of the second low-emissivity layer 41b. The material and thickness of the first low-refractive-index layer 43a may be the same as or different from the material and thickness of the second low-refractive-index layer 43b. The material and thickness of the first high-refractive-index layer 42a may be the same as or different from the material and thickness of the second high-refractive-index layer 42b.

In a fifth specific application scenario, as illustrated in FIG. 8, the reflective coating 40 includes one low-emissivity layer and three laminated structures of "high-refractive-index layer/low-refractive-index layer". Specifically, a low-emissivity layer 41, a first high-refractive-index layer 42a, a first low-refractive-index layer 43a, a second high-refractive-index layer 42b, a second low-refractive-index layer 43b, a third high-refractive-index layer 42c, and a third low-refractive-index layer 43c are disposed on the fourth surface 302 in sequence. The material and thickness of the first low-refractive-index layer 43a, the material and thickness of the second low-refractive-index layer 43b, and the material and thickness of the third low-refractive-index layer 43c may be the same as or different from one another. The material and thickness of the first high-refractive-index layer 42a, the material and thickness of the second high-refractive-index layer 42b, and the material and thickness of the third high-refractive-index layer 42c may be the same as or different from one another.

Comparative examples 1 to 3 and examples 1 to 9

For ease of understanding, terms involved in the embodiments of the present disclosure are explained.

Thickness: a physical thickness.

Refractive index: a refractive index of transmission light with a wavelength of 550 nm.

Incident angle: an angle between the projection light emitted by the projection device and a face normal at incident position when the projection light is incident on the head-up display glass.

Solar green glass with the thickness of 2.1 mm: a visible-light transmittance *TL* greater than or equal to 80%, and a solar direct transmittance *TE* less than or equal to 60%.

Ordinary green glass with the thickness of 2.1 mm: a visible-light transmittance *TL* greater than or equal to 85%, and a solar direct transmittance *TE* greater than 70%.

Transparent glass with the thickness of 2.1 mm: a visible-light transmittance *TL* greater than or equal to 90%, and a solar direct transmittance *TE* greater than 80%.

Standard PVB with a uniform thickness of 0.76 mm: a visible-light transmittance *TL* greater than or equal to 85%, and a solar direct transmittance *TE* greater than 80%.

Heat-insulated PVB with a uniform thickness of 0.76 mm: a visible-light transmittance *TL* greater than or equal to 80%, and a solar direct transmittance *TE* less than 70%.

Transparent glass with a thickness of 1.6 mm: a visible-light transmittance *TL* greater than or equal to 90%, and a solar direct transmittance *TE* greater than 80%.

P-polarized light reflectivity *Rp:* a reflectivity of head-up display glass 100 for projection light incident at an incident angle of 65°, calculated according to International Organization for Standardization (ISO) 9050, measured form the inner glass 30.

Ratio C of reflectivity of primary image to reflectivity of secondary image: a reflectivity of a primary head-up display image and a reflectivity of a secondary head-up display image measured from the inner glass 30 are calculated according to ISO9050, where the primary head-up display image and the secondary head-up display image are formed by the projection light incident at an incident angle of 65°, and ratio C is calculated according to "ratio of reflectivity of primary image to reflectivity of secondary image = reflectivity of primary head-up display image / reflectivity of secondary head-up display image".

Visible-light reflectivity *RL4* of fourth surface: a reflectivity of the head-up display glass 100 for visible light incident at an incident angle of 65° calculated according to the standard ISO9050, measured from the inner glass 30.

Value of *a RL1(a)* of reflected color of first surface for visible light: a value of *a* represents a red and green value, and is calculated according to International Commission on Illumination (CIE) Lab color model, based on a D65 light source and a field angle of 10°, at an incident angle of 65°, measured from outer glass 10.

Visible-light transmittance *TL:* a visible-light transmittance of the head-up display glass 100 measured and calculated according to the standard ISO9050, at an incident angle of 8°.

Emissivity e: an emissivity measured from the inner glass 30, measured with a Fourier infrared spectrometer, and calculated and calibrated according to standard European Norm (EN) 12898.

Total solar energy transmittance *Tts:* a total solar energy transmittance of the head-up display glass measured and calculated according to standard ISO9050, at an incident angle of 8°.

Measurement from inner glass: light incident on head-up display glass 100 is measured from an inner glass 30, which is equivalent to light incident on the head-up display glass 100 being measured from the inside of a vehicle after the head-up display glass 100 is mounted on the vehicle.

Measurement from outer glass: light incident on head-up display glass 100 is measured from an outer glass 10, which is equivalent to light incident on the head-up display glass 100 being measured from the outside of a vehicle after the head-up display glass 100 is mounted on the vehicle.

Comparative examples 1 to 2 and examples 1 to 4

An outer glass 10, an interlayer 20, and an inner glass 30 in each of comparative examples 1 to 2 and examples 1 to 4 are prepared. In addition, a reflective coating 40 in each of comparative examples 1 to 2 and examples 1 to 4 is deposited on a fourth surface 302 of the inner glass 30 by a magnetron sputtering process or the like. Then, processing and manufacturing are performed according to a vehicle glass production process. The reflective coating 40 can withstand a high temperature heat treatment of at least 560°C and a bending treatment, to obtain head-up display glass 100 in each of comparative examples 1 to 2 and examples 1 to 4.

Solar green glass, ordinary green glass, or transparent glass (ordinary clear glass) with a thickness of 2.1 mm may be selected as the outer glass 10. Standard PVB or heat-insulated PVB with a thickness of 0.76 mm may be selected as the interlayer 20. Transparent glass with a thickness of 1.6 mm may be selected as the inner glass 30.

### Comparative example 1

The outer glass 10 is solar green glass with the thickness of 2.1 mm. The interlayer 20 is heat-insulated PVB with the thickness of 0.76 mm. The inner glass 30 is transparent glass with the thickness of 1.6 mm.

Reflective coating 40: not provided.

### Comparative example 2

The outer glass 10 is solar green glass with the thickness of 2.1 mm. The interlayer 20 is standard PVB with the uniform thickness of 0.76 mm. The inner glass 30 is transparent glass with the thickness of 1.6 mm.

Reflective coating 40: a high-refractive-index layer SiAlNₓ with a thickness of 28.6 nm, a high-refractive-index layer TiOₓ with a thickness of 45.8 nm, and a low-refractive-index layer SiO₂ with a thickness of 111 nm are deposited on the fourth surface 302 in sequence.

### Example 1

The outer glass 10 is solar green glass with the thickness of 2.1 mm. The interlayer 20 is standard PVB with the uniform thickness of 0.76 mm. The inner glass 30 is transparent glass with the thickness of 1.6 mm.

Reflective coating 40: a low-emissivity layer ITO with a thickness of 163.6 nm, a high-refractive-index layer TiOₓ with a thickness of 45.8 nm, and a low-refractive-index layer SiO₂ with a thickness of 114.4 nm are deposited on the fourth surface 302 in sequence.

### Example 2

The outer glass 10 is ordinary green glass with the thickness of 2.1 mm. The interlayer 20 is standard PVB with the uniform thickness of 0.76 mm. The inner glass 30 is transparent glass with the thickness of 1.6 mm.

Reflective coating 40: a low-emissivity layer ITO with a thickness of 147.6 nm, a high-refractive-index layer TiOₓ with a thickness of 58.4 nm, and a low-refractive-index layer SiO₂ with a thickness of 105.3 nm are deposited on the fourth surface 3 02 in sequence.

### Example 3

The outer glass 10 is solar green glass with the thickness of 2.1 mm. The interlayer 20 is standard PVB with the uniform thickness of 0.76 mm. The inner glass 30 is transparent glass with the thickness of 1.6 mm.

Reflective coating 40: a low-emissivity layer ITO with a thickness of 30.9 nm, a high-refractive-index layer TiOₓ with a thickness of 45.8 nm, and a low-refractive-index layer SiO₂ with a thickness of 114.4 nm are deposited on the fourth surface 302 sequentially.

### Example 4

The outer glass 10 is solar green glass with the thickness of 2.1 mm. The interlayer 20 is heat-insulated PVB with the uniform thickness of 0.76 mm. The inner glass 30 is transparent glass with the thickness of 1.6 mm.

Reflective coating 40: a low-emissivity layer ITO with a thickness of 139.6 nm, a low-refractive-index layer SiO₂ with a thickness of 176.2 nm, a high-refractive-index layer TiOₓ with a thickness of 59.5 nm, and a low-refractive-index layer SiO₂ with a thickness of 102.5 nm are deposited on the fourth surface 302 in sequence.

The projection device 210 and the head-up display glass 100 of each of comparative examples 1 to 2 and examples 1 to 4 are assembled into a head-up display system 200. The projection device 210 can produce projection light, where at least 99% of the projection light is P-polarized light. The projection light is incident on the reflective coating 40 at an incident angle of 45° to 85°. The position of the projection device 210 and the incident angle of the projection light are adjusted, so that the head-up display image that the observer can observe is the sharpest. P-polarized light reflectivity Rp, ratio C of reflectivity of primary image to reflectivity of secondary image, visible-light reflectivity *RL4* of fourth surface, value of *a RL1(a)* of reflected color of first surface for visible light, visible-light transmittance *TL,* emissivity e, and total solar energy transmittance *Tts* are measured and calculated. Measurement results of comparative examples 1 to 2 and examples 1 to 4 are recorded in Table 1.

**Table 1: measurement results of head-up display glass in each of comparative examples 1 to 2 and examples 1 to 4**

| | Comparative example 1 | Comparative example 2 | Example 1 | Example 2 | Example 3 | Example 4 |
|---|---|---|---|---|---|---|
| Outer glass | Solar green glass | Transparent glass | Transparent glass | Ordinary green glass | Solar green glass | Solar green glass |
| Interlayer | Heat-insulated PVB | Standard PVB | Standard PVB | Standard PVB | Standard PVB | Heat-insulated PVB |
| Inner glass | Transparent glass | Transparent glass | Transparent glass | Transparent glass | Transparent glass | Transparent glass |
| Thickness of low-emissivity layer | 0 | 0 | 163.6 nm | 147.6 nm | 30.9 nm | 139.6 nm |
| Quantity of laminated structure | 0 | 1 | 1 | 1 | 1 | 1 |
| P-polarized light reflectivity *Rp* | 1.91% | 20.36% | 20.33% | 20.91% | 19.48% | 20.12% |
| Ratio C of reflectivity of primary image to reflectivity of secondary image | 1.54 | 28.63 | 29.18 | 30.76 | 37.41 | 40.06 |
| Visible-light reflectivity *RL4* of fourth surface | 18.56% | 23.7% | 24.27% | 24.25% | 20.79% | 21.2% |
| Value of *a RL1(a)* of reflected color of first surface for visible light | -2.45 | 3.36 | -0.23 | 0.48 | -1.32 | -2.91 |
| visible-light transmittance *TL* | 78.94% | 80.09% | 79.3% | 77.64% | 70.83% | 71.91% |
| Emissivity *e* | 0.9 | 0.9 | 0.2 | 0.21 | 0.84 | 0.22 |
| Total solar energy transmittance *Tts* | 52.05% | 72.37% | 64.61% | 61.17% | 58.76% | 44.71% |

It can be seen from Table 1 that the head-up display glass in comparative example 1 includes solar green glass and heat-insulated PVB, so that a total solar energy transmittance *Tts* of the head-up display glass is less than 5.5%, and the head-up display glass has good heat-insulating performance. However, the head-up display glass in comparative example 1 is not provided with a reflective coating, so that the head-up display glass has a P-polarized light reflectivity *Rp* less than 2%, a ratio C of reflectivity of primary image to reflectivity of secondary image less than 2, and an emissivity e of 0.9. That is, the head-up display glass in comparative example 1 cannot display a sharp head-up display image without ghosting, and does not have low-emissivity performance.

The head-up display glass in comparative example 2 is provided with a reflective coating that does not include a low-emissivity layer, so that the head-up display glass can display a sharp head-up display image without ghosting. However, the head-up display glass has a value of *a RL1(a)* of reflected color of first surface for visible light greater than 1, an emissivity e of 0.9, and a total solar energy transmittance *Tts* greater than 70%. That is, the head-up display glass in comparative example 2 is slightly reddish when observed from the outside of the vehicle, and does not have heat insulation performance and low-emissivity performance.

The head-up display glass in example 1 is provided with a reflective coating that includes a low-emissivity layer, so that the head-up display glass has a P-polarized light reflectivity Rp greater than or equal to 20%, primary, and a ratio C of reflectivity of primary image to reflectivity of secondary image greater than or equal to 28, a visible-light reflectivity *RL4* of fourth surface less than or equal to 25%, a value of *a RL1(a)* of reflected color of first surface for visible light less than or equal to 1, a visible-light transmittance *TL* greater than or equal to 70%, an emissivity e less than or equal to 0.2, and a total solar energy transmittance *Tts* less than or equal to 65%. That is, the head-up display glass in example 1 can display a sharp head-up display image without ghosting, and has excellent low-emissivity performance. Compared with comparative example 2, the head-up display glass in example 1 has good heat insulation performance without the use of solar green glass and heat-insulated PVB.

The head-up display glass in example 2 is provided with a reflective coating that includes a low-emissivity layer, so that the head-up display glass has a P-polarized light reflectivity Rp greater than or equal to 20%, a ratio C of reflectivity of primary image to reflectivity of secondary image greater than or equal to 30, a visible-light reflectivity *RL4* of fourth surface less than or equal to 25%, a value of *a RL1(a)* of reflected color of first surface for visible light less than or equal to 1, a visible-light transmittance *TL* greater than or equal to 70%, an emissivity e less than or equal to 0.25, and a total solar energy transmittance *Tts* less than or equal to 65%. That is, the head-up display glass in example 2 can display a sharp head-up display image without ghosting, and has excellent low-emissivity performance. Compared with comparative example 2, the head-up display glass in example 2 has better heat insulation performance without the use of solar green glass and heat-insulated PVB.

The head-up display glass in example 3 is provided with a reflective coating that includes a low-emissivity layer, and the head-up display glass has a P-polarized light reflectivity Rp greater than or equal to 1.8%, a ratio C of reflectivity of primary image to reflectivity of secondary image greater than or equal to 35%, a visible-light reflectivity *RL4* of fourth surface less than or equal to 2.5%, a value of *a RL1(a)* of reflected color of first surface for visible light less than or equal to1, a visible-light transmittance *TL* greater than or equal to 7.0%, an emissivity e less than or equal to 0.85, and a total solar energy transmittance *Tts* less than or equal to 6.0%. That is, the head-up display glass in example 3 can display a sharp head-up display image without ghosting, and has good heat insulation performance and low-emissivity performance. Compared with example 1 and example 2, the ratio C of reflectivity of primary image to reflectivity of secondary image in example 3 can be significantly improved on the basis of no significant change in the P-polarized light reflectivity Rp, thereby obtaining a sharper head-up display image without ghosting.

The head-up display glass in example 4 is provided with a reflective coating that includes a low-emissivity layer, so that the head-up display glass has a P-polarized light reflectivity Rp greater than or equal to 20%, a ratio C of reflectivity of primary image to reflectivity of secondary image greater than or equal to 40, a visible-light reflectivity *RL4* of fourth surface less than or equal to 25%, a value of *a RL1(a)* of reflected color of first surface for visible light less than or equal to1, a visible-light transmittance *TL* greater than or equal to 70%, an emissivity e less than or equal to 0.25, and a total solar energy transmittance *Tts* less than or equal to 45%. That is, the head-up display glass in example 4 can display a sharp head-up display image without ghosting, and has excellent heat insulation and low-emissivity performance. Compared with examples 1 to 3, the reflective coating of example 4 specifically includes "low-emissivity layer/low-refractive-index layer/laminated structure", which is equivalent to that the low-emissivity layer is located in one laminated structure and replaces the high-refractive-index layer in the laminated structure, so that the ratio C of reflectivity of primary image to reflectivity of secondary image of the head-up display glass in example 4 is further improved.

### Comparative example 3 and examples 5 to 9

An outer glass 10, an interlayer 20, and an inner glass 30 in each of comparative example 3 and examples 5 to 9 are prepared. Solar green glass with a thickness of 2.1 mm is selected as the outer glass 10. Heat-insulated PVB with a thickness of 0.76 mm is selected as the interlayer 20. Transparent glass with a thickness of 1.6 mm is selected as the inner glass 30. A reflective coating 40 in each of comparative example 3 and examples 5 to 9 is deposited on a fourth surface 302 of the inner glass 30 by magnetron sputtering process or the like. Then, processing and manufacturing are performed according to a vehicle glass production process. The reflective coating 40 can withstand a high-temperature heat treatment of at least 560° C and a bending treatment, to obtain head-up display glass 100 in each of comparative example 3 and examples 5 to 9.

### Comparative example 3

Reflective coating 40: a high-refractive-index layer SiAlNₓ with a thickness of 58.4 nm, a high-refractive-index layer TiOₓ with a thickness of 78.9 nm, a low-refractive-index layer SiO₂ with a thickness of 161.3 nm, a high-refractive-index layer TiOₓ with a thickness of 27.5 nm, and a low-refractive-index layer SiO₂ with a thickness of 107.1 nm are deposited on the fourth surface 302 in sequence.

### Example 5

Reflective coating 40: a low-emissivity layer ITO with a thickness of 57.2 nm, a high-refractive-index layer TiOₓ with a thickness of 83.5 nm, a low-refractive-index layer SiO₂ with a thickness of 161.3 nm, a high-refractive-index layer TiOₓ with a thickness of 46.9 nm, and a low-refractive-index layer SiO₂ with a thickness of 107.1 nm are deposited on the fourth surface 302 in sequence.

### Example 6

Reflective coating 40: a low-emissivity layer ITO with a thickness of 175.1 nm, a high-refractive-index layer TiOₓ with a thickness of 96.1 nm, a low-refractive-index layer SiO₂ with a thickness of 161.3 nm, a high-refractive-index layer TiOₓ with a thickness of 46.9 nm, and a low-refractive-index layer SiO₂ with a thickness of 107.1 nm are deposited on the fourth surface 302 in sequence.

### Example 7

Reflective coating 40: a low-emissivity layer ITO with a thickness of 211.7 nm, a high-refractive-index layer TiOₓ with a thickness of 101.8 nm, a low-refractive-index layer SiO₂ with a thickness of 173.9 nm, a high-refractive-index layer TiOₓ with a thickness of 43.5 nm, and a low-refractive-index layer SiO₂ with a thickness of 100.2 nm are deposited on the fourth surface 302 in sequence.

### Example 8

Reflective coating 40: a low-emissivity layer ITO with a thickness of 652.2 nm, a high-refractive-index layer TiOₓ with a thickness of 101.8 nm, a low-refractive-index layer SiO₂ with a thickness of 173.9 nm, a high-refractive-index layer TiOₓ with a thickness of 43.5 nm, a low-refractive-index layer SiO₂ with a thickness of 72.3 nm, and a low-emissivity layer ITO with a thickness of 21.7 nm are deposited on the fourth surface 302 in sequence.

### Example 9

Reflective coating 40: a low-emissivity layer ITO with a thickness of 961.1 nm, a high-refractive-index layer TiOₓ with a thickness of 17.2 nm, a low-refractive-index layer SiO₂ with a thickness of 52.6 nm, a high-refractive-index layer TiOₓ with a thickness of 17.8 nm, a low-refractive-index layer SiO₂ with a thickness of 64.1 nm, a high-refractive-index layer TiOₓ with a thickness of 59.5 nm, and a low-refractive-index layer SiO₂ with a thickness of 96.1 nm are deposited on the fourth surface 302 in sequence.

The projection device 210 and the head-up display glass 100 of each of comparative example 3 and examples 5 to 9 are assembled into a head-up display system 200. The projection device 210 can produce projection light, where at least 99% of the projection light is P-polarized light. The projection light is incident on the reflective coating 40 at an incident angle of 45° to 85°. The position of the projection device 210 and the incident angle of the projection light are adjusted, so that the head-up display image that the observer can observe is the sharpest. **P-**polarized light reflectivity Rp, ratio C of reflectivity of primary image to reflectivity of secondary image, visible-light reflectivity *RL4* of fourth surface, value of *a RL1(a)* of reflected color of first surface for visible light, visible-light transmittance *TL,* emissivity e, and total solar energy transmittance *Tts* are measured and calculated. Measurement results of comparative example 3 and examples 5 to 9 are recorded in Table 2.

**Table 2: measurement results of head-up display glass in each of comparative example 3 and examples 5 to 9**

| | Comparative example 3 | Example 5 | Example 6 | Example 7 | Example 8 | Example 9 |
|---|---|---|---|---|---|---|
| Outer glass | Solar green glass | | | | | |
| Interlayer | Heat-insulated PVB | | | | | |
| Inner glass | Transparent glass | | | | | |
| Thickness of low-emissivity layer | 0 | 57.2 nm | 175.1 nm | 211.7 nm | 673.9 nm | 961.1 nm |
| Quantity of laminated structure | 2 | 2 | 2 | 2 | 2 | 3 |
| P-polarized light reflectivity *Rp* | 23.41% | 26.92% | 24.56% | 23.99% | 20.15% | 21.42% |
| Ratio C of reflectivity of primary image to reflectivity of secondary image | 55.65 | 64.02 | 55.4 | 53.68 | 42.99 | 49.03 |
| Visible-light reflectivity *RL4* of fourth surface | 30.69% | 28.99% | 26.37% | 29.04% | 23.04% | 24.79% |
| Value of *a RL1(a)* of reflected color of first surface for visible light | -0.2 | -0.64 | -1.05 | -0.81 | -2.72 | -0.57 |
| visible-light transmittance *TL* | 72.35% | 73.38% | 72.15% | 77.15% | 70.69% | 71% |
| Emissivity *e* | 0.9 | 0.77 | 0.19 | 0.18 | 0.1 | 0.1 |
| Total solar energy transmittance *Tts* | 50.09% | 47.28% | 42.35% | 43.38% | 39.87% | 40.49% |

It can be seen from Table 2 that the head-up display glass in comparative example 3 is provided with a reflective coating including no low-emissivity layer. Although the head-up display glass can display a sharp head-up display image without ghosting, the head-up display glass has an emissivity e of 0.9 and does not have low-emissivity performance.

The head-up display glass in example 5 is provided with a reflective coating that includes a low-emissivity layer, so that the head-up display glass has a P-polarized light reflectivity Rp greater than or equal to 25%, a ratio C of reflectivity of primary image to reflectivity of secondary image greater than or equal to 60, a visible-light reflectivity *RL4* of fourth surface less than or equal to 30%, a value of *a RL1(a)* of reflected color of first surface for visible light less than or equal to 1, a visible-light transmittance *TL* greater than or equal to 70%, an emissivity e less than or equal to 0.80, and a total solar energy transmittance *Tts* less than or equal to 50%. That is, the head-up display glass in example 5 can display a sharp head-up display image without ghosting, and has good heat insulation performance and low-emissivity performance.

The head-up display glass in example 6 is provided with a reflective coating that includes a low-emissivity layer, so that the head-up display glass has a P-polarized light reflectivity Rp greater than or equal to 20%, a ratio C of reflectivity of primary image to reflectivity of secondary image greater than or equal to 55, a visible-light reflectivity *RL4* of fourth surface less than or equal to 30%, a value of *a RL1(a)* of reflected color of first surface for visible light less than or equal to 1, a visible-light transmittance *TL* greater than or equal to 70%, an emissivity e less than or equal to 0.20, and a total solar energy transmittance *Tts* less than or equal to 45%. That is, the head-up display glass in example 6 can display a sharp head-up display image without ghosting, and has excellent heat insulation performance and low-emissivity performance.

The head-up display glass in example 7 is provided with a reflective coating that includes a low-emissivity layer, so that the head-up display glass has a P-polarized light reflectivity Rp greater than or equal to 20%, a ratio C of reflectivity of primary image to reflectivity of secondary image greater than or equal to 50, a visible-light reflectivity *RL4* of fourth surface less than or equal to 30%, a value of *a RL1(a)* of reflected color of first surface for visible light less than or equal to 1, a visible-light transmittance *TL* greater than or equal to 70%, an emissivity e less than or equal to 0.20, and a total solar energy transmittance *Tts* less than or equal to 45%. That is, the head-up display glass in example 7 can display a sharp head-up display image without ghosting, and has excellent heat insulation performance and low-emissivity performance.

The head-up display glass in example 8 is provided with a reflective coating that includes a low-emissivity layer, so that the head-up display glass has a P-polarized light reflectivity Rp greater than or equal to 20%, a ratio C of reflectivity of primary image to reflectivity of secondary image greater than or equal to 40, a visible-light reflectivity *RL4* of fourth surface less than or equal to 25%, a value of *a RL1(a)* of reflected color of first surface for visible light less than or equal to 1, a visible-light transmittance *TL* greater than or equal to 70%, an emissivity e less than or equal to 0.1, and a total solar energy transmittance *Tts* less than or equal to 40%. That is, the head-up display glass in example 8 can display a sharp head-up display image without ghosting, and has excellent heat insulation performance and low-emissivity performance.

The head-up display glass in example 9 is provided with a reflective coating that includes a low-emissivity layer, so that the head-up display glass has a P-polarized light reflectivity Rp greater than or equal to 20%, a ratio C of reflectivity of primary image to reflectivity of secondary image greater than or equal to 45, a visible-light reflectivity *RL4* of fourth surface less than or equal to 25%, a value of *a RL1(a)* of reflected color of first surface for visible light 1, a visible-light transmittance *TL* greater than or equal to 70%, an emissivity e less than or equal to 0.1, and a total solar energy transmittance *Tts* less than or equal to 45%. That is, the head-up display glass in example 7 can display a sharp head-up display image without ghosting, and has excellent heat insulation performance and low-emissivity performance.

The embodiments of the present disclose are described in detail above. Although the principle and implementations of the present disclosure are described herein by using specific examples herein, descriptions of embodiments are merely intended to help understand the method of the preset disclosure and the core idea of the present disclosure. Meanwhile, for those of ordinary skill in the art, changes may be made to the specific implementations and application range based on the idea of the present disclosure. In conclusion, the contents of this specification may not be construed as a limitation to the present disclosure.

## Claims

1. Head-up display glass, comprising outer glass, inner glass, an interlayer, and a reflective coating, wherein the outer glass has a first surface and a second surface opposite to the first surface, the inner glass has a third surface and a fourth surface opposite to the third surface, the third surface is opposite to the second surface, the interlayer is disposed between the second surface and the third surface, and the reflective coating is disposed on the fourth surface, and the reflective coating is configured to reflect P-polarized light; and
the reflective coating comprises at least one low-emissivity layer and at least one laminated structure that are stacked, each of the at least one laminated structure comprises a high-refractive-index layer and a low-refractive-index layer that are stacked in sequence, and in each of the at least one laminated structure, the high-refractive-index layer is closer to the fourth surface than the low-refractive-index layer, the high-refractive-index layer has a refractive index greater than or equal to 1.8, and the low-refractive-index layer has a refractive index less than 1.8.

2. The head-up display glass of claim 1, wherein the at least one low-emissivity layer each is made of indium tin oxides (ITO), fluorine-doped tin oxides (FTO), or doped zinc oxides, and a doping element in the doped zinc oxides comprises at least one of yttrium (Y), calcium (Ca), tin (Sn), indium (In), copper (Cu), magnesium (Mg), tungsten (W), hafnium (Hf), zirconium (Zr), aluminum (Al), sliver (Ag), platinum (Pt), or gold (Au).

3. The head-up display glass of claim 1, wherein when a thickness of the at least one low-emissivity layer is greater than or equal to 30 nm and less than or equal to 100 nm, an emissivity of the head-up display glass measured from the inner glass is less than or equal to 0.85.

4. The head-up display glass of claim 1, wherein when a thickness of the at least one low-emissivity layer is greater than 100 nm and less than or equal to 200 nm, an emissivity of the head-up display glass measured from the inner glass is less than or equal to 0.5.

5. The head-up display glass of claim 1, wherein when a thickness of the at least one low-emissivity layer is greater than 200 nm, an emissivity of the head-up display glass measured from the inner glass is less than or equal to 0.2.

6. The head-up display glass of any one of claims 1 to 5, wherein the at least one low-emissivity layer is in direct contact with the fourth surface and/or in direct contact with the low-refractive-index layer.

7. The head-up display glass of any one of claims 1 to 5, wherein a total thickness of at least one low-refractive-index layer of the at least one laminated structure is larger than a total thickness of at least one high-refractive-index layer of the at least one laminated structure.

8. The head-up display glass of any one of claims 1 to 5, wherein the outer glass is tinted glass, and the outer glass has a solar direct transmittance less than 70%, a visible-light transmittance greater than 80%, and an absorbance greater than or equal to 3% for the P-polarized light.

9. The head-up display glass of claim 1, wherein the interlayer is a rectangular interlayer or a wedge-shaped interlayer having a wedge angle ranging from 0.01 mrad to 0.18 mrad.

10. The head-up display glass of any one of claims 1 to 5, having a total solar energy transmittance less than or equal to 65%.

11. The head-up display glass of any one of claims 1 to 5, having a reflectivity greater than or equal to 18% for the P-polarized light incident at an incident angle of 65°.

12. The head-up display glass of any one of claims 1 to 5, having a reflectivity greater than or equal to 13% for P-polarized light having a wavelength of each of 469 nm, 532 nm, and 629 nm incident at an incident angle of 65°.

13. The head-up display glass of any one of claims 1 to 5, wherein a ratio of a reflectivity of a primary image to a reflectivity of a secondary image of the head-up display glass is greater than or equal to 25 for P-polarized light incident at an incident angle of 65°.

14. The head-up display glass of any one of claims 1 to 5, wherein the head-up display glass has a visible-light transmittance greater than or equal to 70%, a reflected color of the head-up display glass for visible light incident at an incident angle of 65° measured from the outer glass has a value of *a* less than or equal to 1 in a color space Lab, and the head-up display glass has a reflectivity less than 30% for visible light incident at an incident angle of 65° measured from the inner glass.

15. The head-up display glass of any one of claims 1 to 5, wherein the reflective coating comprises two low-emissivity layers, one of the two low-emissivity layers is located between the fourth surface and the at least one laminated structure, and the other of the two low-emissivity layers is located on an outside of a low-refractive-index layer of a farthest laminated structure of the at least one laminated structure away from the fourth surface.

16. The head-up display glass of any one of claims 1 to 5, wherein the at least one low-emissivity layer is located in the at least one laminated structure, one high-refractive-index layer in one of the at least one laminated structure is replaced by one of the least one low-emissivity layer in said one of the at least one laminated structure, and a structure of "low-emissivity layer/low-refractive-index layer" is formed.

17. The head-up display glass of any one of claims 1 to 5, wherein in the reflective coating, a total thickness of at least one low-refractive-index layer of the at least one laminated structure is larger than a total thickness of at least one high-refractive-index layer of the at least one laminated structure.

18. The head-up display glass of any one of claims 1 to 5, wherein the outer glass has a visible-light transmittance greater than or equal to 80%, and a solar direct transmittance *TE* less than or equal to 60%, and the interlayer has a visible-light transmittance greater than or equal to 80%, and a solar direct transmittance less than 70%.

19. The head-up display glass of any one of claims 1 to 5, wherein the high-refractive-index layer comprises at least two high-refractive-index sub-layers, and a refractive-index difference between any two adjacent high-refractive-index sub-layers of the at least two high-refractive-index sub-layers is greater than or equal to 0.1; and/or
the low-refractive-index layer comprises at least two low-refractive-index sub-layers.

20. A head-up display system, comprising a projection device and the head-up display glass of any one of claims 1 to 19, wherein the projection device is configured to produce projection light, at least 80% of the projection light is P-polarized light, and the projection light is incident on the reflective coating at an incident angle ranging from 45° to 85°.
